# EUROPÄISCHE PATENTSCHRIFT

(11) **EP 0 757 272 B1**
(45) Veröffentlichungstag und Bekanntmachung des Hinweises auf die Patenterteilung: **13.09.2000**
(21) Anmeldenummer: 96111227.3
(22) Anmeldetag: 12.07.1996
(51) Int. Cl.: G02B 21/24, G02B 21/26

(54) **Getriebe zur Fokuseinstellung für Mikroskope**
Gearing for adjusting focal point of microscopes
Transmission pour l'ajustement de la focalisation des microscopes

(30) Priorität: 31.07.1995 DE 19528041
(43) Veröffentlichungstag der Anmeldung: 05.02.1997
(73) Patentinhaber: Leica Microsystems Wetzlar GmbH, 35578 Wetzlar (DE)
(72) Erfinder: Schalz, Karl-Josef, 35781 Weilburg (DE)

(56) Entgegenhaltungen:
- DE-A- 2 648 484
- DE-U- 1 825 959
- FR-A- 890 281

## Beschreibung

Die Erfindung betrifft einen Fokussiertrieb für den Objekttisch eines Mikroskops gemäß dem Oberbegriff des Patentanspruchs 1 bzw. dem Oberbegriff des Patentanspruchs 2.

Die Fokuseinstellung bei Mikroskopen erfolgt durch eine Bewegung des Objekttisches, welcher über ein mechanisches Getriebe entlang der optischen Achse des Mikroskopobjektivs bewegt wird. Das Getriebe ist aus einer durch den Mikroskopkörper durchlaufenden Achse und mehreren Zahnrädern aufgebaut, wobei die beiden Enden der Achse jeweils zwei koaxial angeordnete und drehbar gelagerte Bedienknöpfe aufweisen. Einer der beiden Bedienknöpfe ist für den schnellen Fokusgrobtrieb und der andere für den Fokusfeintrieb vorgesehen und über das Getriebe mit der durchlaufenden Achse verbunden.

Ein derartiger Grob- und Feinverstellungsantrieb für Mikroskope ist aus der DE 26 27 486 A1 bekannt. Zusätzlich zur den beiden manuellen Einstellknöpfen mit einem Planetengetriebe ist hier eine zusätzliche motorische Feineinstellung vorgesehen, die über einen Hebel auf den Grobtrieb des Planetengetriebes wirkt.

Ein weiterer Einstellantrieb für den Mikroskoptisch ist aus der DE 32 15 566 A1 bekannt. Neben den manuell zu betätigenden und koaxial angeordneten Bedienknöpfen ist ebenfalls ein zusätzlicher motorischer Fokusantrieb vorgesehen, der direkt über eine Antriebswelle und einen Exzenter auf den Mikroskoptisch wirkt.

In der DE 35 28 343 C2 wird ein Antriebsmechanismus für die X-Y-Positionierung eines Mikroskop-Kreuztisches beschrieben. Der manuell zu bedienende Antrieb weist ein Reibungsgehemme für den Kreuztischs auf. Das Reibungsgehemme erlaubt eine reibungsarme Grobpositionierung und eine einstellbare Reibhemmung für die Feinpositionierung des Tisches.

Aus der DE 26 48 484 C3 ist ein manuell zu bedienender Grob- und Feinverstellungsantrieb bekannt, bei dem ein weiterer Bedienknopf für eine Feinstverstellung vorgesehen ist. Bei dieser Lösung sind somit drei Einstellknöpfe für die manuelle Fokuseinstellung koaxial angeordnet und über ein Getriebe und eine Zahnstange mit dem Objekttisch eines Mikroskops verbunden. Es hat sich jedoch gezeigt, daß dadurch eine für den Bediener ungewöhnlich große Bauform gewählt werden mußte und somit die Handhabbarkeit der Fokuseinstellung beeinträchtigt wurde.

Es besteht jedoch weiterhin das Bedürfnis bei verschiedenen Mikroskopanwendungen den bewährten Feintrieb des Mikroskops zusätzlich zu untersetzen, um so neben der Funktion Feintrieb noch eine Funktion Feinsttrieb zur Verfügung zu haben.

Es ist daher Aufgabe der vorliegenden Erfindung, eine manuelle Höhenverstellung für den Objekttisch eines Mikroskops mit Feinsttrieb so auszubilden, daß die Bauform der Bedienknöpfe erhalten bleibt und trotzdem die gewohnte Handhabung des Fokussiertriebs gewährleistet ist.

Diese Aufgabe wird erfindungsgemäß durch die im kennzeichnenden Teil des Patentanspruches 1 bzw. Patentanspruchs 2 angegebenen Merkmale gelöst. Weitere vorteilhafte Weiterbildungen der Erfindung sind Gegenstand der Unteransprüche.

Mit der Erfindung wird erreicht, daß auch weiterhin beidseitig am Mikroskopstativ die üblichen koaxial angeordneten Bedienknöpfe in der ergonomisch günstigen Baugröße vorhanden sind und bei Bedarf durch einfaches Einschieben der Antriebswelle eine Umschaltung des Feintriebs auf die Übersetzung Feinsttrieb erfolgt.

Die Erfindung wird anhand von Ausführungsbeispielen mit Hilfe der schematischen Zeichnung näher erläutert. Es zeigen:
- Fig. 1:: einen Schnitt durch das Getriebe des Fokussierantriebs mit zwei Zahnrädern für den Fein- und Feinsttrieb
- Fig. 2:: eine Variante des Getriebes mit einem Kegelrad und einem Reibrad

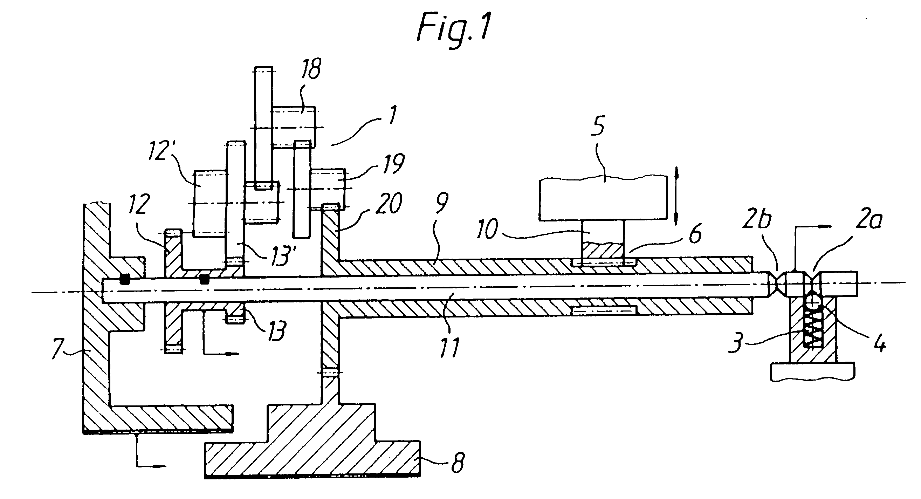

Die Figur 1 zeigt einen Schnitt durch das Getriebe 1 zur Fokuseinstellung eines nicht mit dargestellten Mikroskops. Die Fokuseinstellung erfolgt durch eine Bewegung des Objekttisches 5, welcher über eine getriebliche Verbindung in der optischen Achse (Doppelpfeil) des Mikroskopobjektivs bewegt wird. Das Getriebe 1 weist eine durch den Mikroskopkörper laufende Antriebswelle 9 auf, die in ihrem Innern hohl ausgebildet ist. Der Objekttisch 5 ist über eine Zahnstange 10 und ein Zahngetriebe 6 mit der Antriebswelle 9 verbunden. An der Antriebswelle 9 ist an dem einem Ende ein fest angeordnetes Zahnrad 20 vorgesehen, welches mit dem Bedienknopf 8 für den Grobtrieb verbunden ist. Die Drehbewegung am Bedienknopf 8 wird über das Zahnrad 20, die Antriebswelle 9, das Zahngetriebe 6, die Zahnstange 10 auf den Objekttisch 5 übertragen.

Der Feintrieb weist eine Drehachse 11 auf, die in Pfeilrichtung verschiebbar ausgebildet und die in der Antriebswelle 9 drehbar gelagert ist. An einem Ende der Drehachse 11 sind zwei Nuten 2a und 2b vorgesehen, die zusammen mit einer fest am Mikroskop angeordneten Kugelrastung aus Kugel 4 und Feder 3 eine definierte Stellung der Drehachse 11 bei der Verschiebung gewährleisten.

An dem anderen Ende der Drehachse 11 ist der Bedienknopf 7 für den Feintrieb fest angeordnet. Über ein Getriebe aus den Zahnrädern 13, 13', 18 und 19 wird die Drehbewegung des Bedienknopfes 7 bzw. der Drehachse 11 auf das Zahnrad 20 der Antriebswelle 9 übertragen. In der hier gezeigten Stellung hat der Bedienknopf 7 die Funktion des Feinsttriebs, bedingt durch den kleineren Durchmesser des Zahnrades 13 und den größeren Durchmesser des korrespondierenden Zahnrades 13'.

Zur Umschaltung auf die Funktion Feintrieb wird die Drehachse 11 über den Bedienknopf 7 in Pfeilrichtung eingeschoben, wobei die Kugel 4 in die Nut 2b rastet. Dabei wird auch das Zahnrad 12 mit dem Zahnrad 12' in Eingriff gebracht, wobei die Verbindung zwischen den Zahnrädern 13 und 13' aufgehoben wird. Bei dieser Umschaltung wird eine getriebliche Übersetzung durch den größeren Durchmesser des Zahnrades 12 und den kleineren Durchmesser des Zahnrades 12' erreicht.

Durch Ziehen am Bedienknopf 7, oder durch Einschieben des auf der anderen Seite der Drehachse 11 angeordneten Bedienknopfes (nicht mit dargestellt), läßt sich wieder eine Umschaltung auf die Funktion Feinsttrieb vornehmen.

Es versteht sich von selbst, das die Erfindung nicht auf die Umschaltung von Fein- auf Feinsttrieb beschränkt ist, sondern durch die Anordnung von weiteren Zahnradpaaren zusätzliche Über- bzw. Untersetzungen für den Antrieb erreicht werden können. Dabei wäre es von Vorteil, wenn zum definierten Umschalten auf die weiteren Übersetzungen die Drehachse mit weiteren Nuten ausgestattet ist.

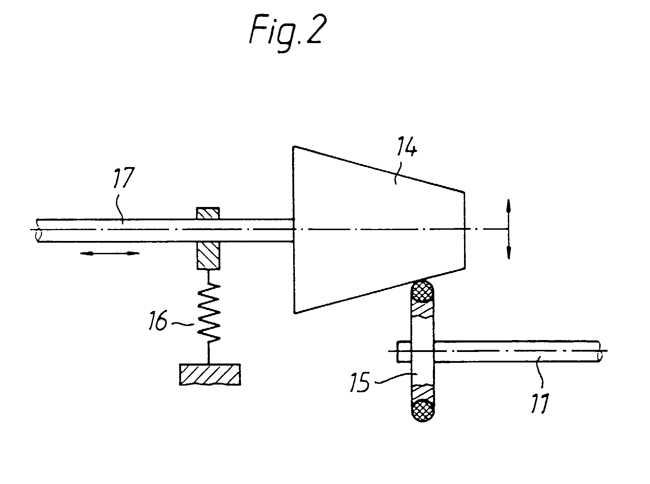

In dem Ausführungsbeispiel der Figur 2 ist anstelle der beiden Zahnräder 12,13 auf der Drehachse 11 ein Reibrad 15 vorgesehen. Das Reibrad 15 steht in einer kraftschlüssigen Verbindung (Feder 16) mit einem Kegelrad 14, welches auf einer zusätzlichen Achse 17 in beiden Doppelpfeilrichtungen verschiebbar angeordnet ist. Das Kegelrad 14 ersetzt in diesem Ausführungsbeispiel die beiden Zahnräder 12' und 13'. Durch die Verwendung einer kraftschlüssigen Verbindung über ein Kegel- 14 und ein Reibrad 15 wird erreicht, daß ein beliebiges, nur durch den Umfang des Kegelrades 14 begrenztes Übersetzungsverhältnis für den Fein- bzw. Feinsttrieb eingestellt werden kann. Dabei können natürlich auf der Achse 11 mehrere Nuten zur Einstellung von verschiedenen definierten Übersetzungen vorgesehen sein.

### Bezugszeichenliste

- 1 -: Getriebe
- 2a-: Nut
- 2b-: Nut
- 3 -: Feder
- 4 -: Kugel
- 5 -: Objekttisch
- 6 -: Zahngetriebe
- 7 -: Bedienknopf (Fein- und Feinsttrieb)
- 8 -: Bedienknopf (Grobtrieb)
- 9 -: Antriebswelle
- 10 -: Zahnstange
- 11 -: Drehachse
- 12 -: Zahnrad (Feintrieb)
- 12'-: Zahnrad (Feintrieb)
- 13 -: Zahnrad (Feinsttrieb)
- 13'-: Zahnrad (Feinsttrieb)
- 14 -: Kegelrad
- 15 -: Reibrad
- 16 -: Feder
- 17 -: zusätzliche Achse
- 18 -: Zahnrad
- 19 -: Zahnrad
- 20 -: Zahnrad (Grobtrieb)

## Patentansprüche

1. Fokussiertrieb für den Objekttisch (5) eines Mikroskops,
- mit einem vermittels koaxial angeordneter Bedienungsknöpfe (7, 8) betätigbaren, mehrstufigen Antrieb für Grob-, Fein- und Feinstverstellung und einem zugehörigen Getriebe (1),
- wobei die Bedienungsknöpfe (7,8) über das Getriebe (1) eine Antriebswelle (9) mit einem Zahnrad (6) drehen, das den Objekttisch (5) mittels einer Zahnstange (10) zwecks Fokussierung in seiner Höhe verstellt,
dadurch gekennzeichnet,
- daß der Bedienknopf (7) für den Feintrieb fest mit einer in ihrer Längsrichtung verschiebbaren Drehachse (11) verbunden ist,
- und daß es die Längsverschieblichkeit dieser Drehachse (11) gestattet, zwischen dem Feintrieb und dem Feinsttrieb umzuschalten,
- wozu die Drehachse (11) Zahnräder (12, 13) mit unterschiedlichen Durchmessern trägt, von denen bei der Umschaltung zwischen dem Fein- und dem Feinsttrieb jeweils eines mit dem Getriebe (1) in Eingriff gebracht wird.

2. Fokussiertrieb für den Objekttisch (5) eines Mikroskops,
- mit einem vermittels koaxial angeordneter Bedienungsknöpfe (7, 8) betätigbaren, mehrstufigen Antrieb für Grob-, Fein- und Feinstverstellung und einem zugehörigen Getriebe (1),
- wobei die Bedienungsknöpfe (7, 8) über das Getriebe (1) eine Antriebswelle (9) mit einem Zahnrad (6) drehen, das den Objekttisch (5) mittels einer Zahnstange (10) zwecks Fokussierung in seiner Höhe verstellt,
dadurch gekennzeichnet,
- daß der Bedienknopf (7) für den Feintrieb fest mit einer in ihrer Längsrichtung verschiebbaren Drehachse (11) verbunden ist,
- und daß es die Längsverschieblichkeit dieser Drehachse (11) gestattet, zwischen dem Feintrieb und dem Feinsttrieb umzuschalten,
- und die Drehachse (11) ein Reibrad (15) trägt, welches in einer kraftschlüssigen Verbindung mit einem die Antriebswelle (9) antreibenden Kegelrad (14) steht und ein kontinuierliches Übersetzungsverhältnis zwischen dem Fein- und dem Feinsttrieb gewährleistet.

3. Fokussiertrieb nach Anspruch 1 oder Anspruch 2, dadurch gekennzeichnet, daß die Antriebswelle (9) als Rohr ausgebildet ist und in ihrem Innern die Drehachse (11) für den Fein- und den Feinsttrieb führt.

4. Fokussiertrieb nach einem der Ansprüche 1 - 3, dadurch gekennzeichnet, daß die Drehachse (11) in ihrer Längsrichtung im Abstand voneinander angebrachte, in Umfangsrichtung umlaufende Nuten (2a, 2b) aufweist, in die eine unter Federspannung stehende Kugel (4) eingreift und dabei für den Feinund Feinsttrieb eine jeweils zugehörige Rastung definiert.

## Claims

1. Focussing drive for the object table (5) of a microscope
- with a multistage drive, which is actuable by means of co-axially arranged operating knobs (7, 8), for coarse, fine and finest adjustment and an associated gear (1),
- wherein the operating knobs (7, 8) by way of the gear (1) rotate a drive shaft (9) with a gear wheel (6), which resets the object table (5) in its height by means of a gear rack (10) for purposes of focussing, characterised in that
- the operating knob (7) for the fine drive is firmly connected with a rotary axle (11) displaceable in its longitudinal direction,
- and the longitudinal displaceability of this rotary axle (11) permits switching over between the fine drive and the finest drive,
- for which purpose the rotary axle (11) carries gear wheels (12, 13) of different diameters, of which a respective one is brought into engagement with the gear (1) during the switching-over between the fine drive and the finest drive.

2. Focussing drive for the object table (5) of a microscope
- with a multistage drive, which is actuable by means of co-axially arranged operating knobs (7, 8), for coarse, fine and finest adjustment and an associated gear (1),
- wherein the operating knobs (7, 8) by way of the gear (1) rotate a drive shaft (9) with a gear wheel (6), which resets the object table (5) in its height by means of a gear rack (10) for purposes of focussing, characterised in that
- the operating knob (7) for the fine drive is firmly connected with a rotary axle (11) displaceable in its longitudinal direction,
- and the longitudinal displaceability of this rotary axle (11) permits switching over between the fine drive and the finest drive,
- and the rotary axle (11) carries a friction wheel (15), which stands in a force-locking connection with a cone wheel (14) driving the drive shaft (9) and ensures a continuous transmission ratio between the fine drive and the finest drive.

3. Focussing drive according to claim 1 or claim 2, characterised in that the drive shaft (9) is formed as a tube and guides the rotary axle (11) for the fine drive and the finest drive in its interior.

4. Focussing drive according to one of the claims 1 to 3, characterised in that the rotary axle (11) has grooves (2a, 2b), which are arranged at a spacing one from the other in its longitudinal direction and encircle it in circumferential direction and into which a spring-loaded ball (4) engages and in that case defines a respectively associated detent for the fine drive and the finest drive.

## Revendications

1. Réglage de la focalisation pour la platine de l'objet (5) d'un microscope,
- avec une commande à plusieurs étages, actionnable au moyen de boutons de commande (7, 8) agencés coaxialement pour le déplacement grossier, précis et très précis et un entraînement correspondant (1)
- les boutons de commande (7, 8) font tourner, par l'entraînement (1), un arbre d'entraînement (9) avec une roue dentée (6) qui déplace la platine (5) de l'objet au moyen d'une crémaillère (10) en vue de sa focalisation, en hauteur,
caractérisé en ce que
- le bouton de commande (7) pour le réglage précis est relié solidement à un axe de rotation (11) mobile en direction longitudinale,
- et en ce que cela permet de transformer la possibilité de déplacement longitudinal de cet axe de rotation (11) entre le réglage précis et le réglage très précis,
- où l'axe de rotation (11) porte des roues dentées (12, 13) avec des diamètres différents et lors du changement entre réglage précis et réglage très précis, une à chaque fois est mise en prise avec l'entraînement (1).

2. Réglage de focalisation pour la platine (5) de l'objet d'un microscope,
- avec une commande pour l'ajustement grossier, précis et très précis à plusieurs étages pouvant être actionnée au moyen de boutons de commande (7, 8) agencés coaxialement et un entraînement correspondant (1)
- les boutons de commande (7, 8) font tourner, par l'entraînement (1), un arbre de commande (9) avec une roue dentée (6), qui déplace la platine (5) de l'objet au moyen d'une crémaillère (10) en vue de sa focalisation en hauteur,
caractérisé en ce que
- le bouton de commande (7) pour le réglage précis est relié à un axe de rotation (11) mobile en direction longitudinale,
et en ce que la possibilité de déplacement longitudinal de cet axe de rotation (11) permet de changer entre le réglage précis et le réglage très précis,
- et l'axe de rotation (11) porte une roue à friction (15) qui est en liaison de force avec une roue conique (14) entraînant l'arbre d'entraînement (9) et garantit un rapport continu de démultiplication entre le réglage précis et très précis.

3. Réglage de focalisation selon la revendication 1 ou la revendication 2, caractérisé en ce que l'arbre d'entraînement (9) a la forme d'un tube et conduit en son intérieur l'axe de rotation (11) pour le réglage précis et très précis.

4. Réglage de focalisation selon l'une des revendications 1-3, caractérisé en ce que l'axe de rotation (11) présente des rainures (2a, 2b) continues en direction périphérique, prévues à une certaine distance les unes des autres en direction longitudinale, dans lesquelles s'insère une bille (4) placée sous la tension d'un ressort et cela définit ainsi un enclenchement correspondant pour le réglage précis et très précis.
